(19) Europäisches Patentamt
European Patent Office
Office européen des brevets

(11) EP 0 707 403 B1

(12) **EUROPEAN PATENT SPECIFICATION**

(45) Date of publication and mention
of the grant of the patent:
**22.09.2004 Bulletin 2004/39**

(51) Int Cl.$^7$: **H04M 1/19**, H04R 1/08

(21) Application number: **95307149.5**

(22) Date of filing: **10.10.1995**

(54) **Telephone mouthpiece and method for minimising wind noise**

Verfahren zur Verminderung des Atemgeräusches für ein Telefonhörer-Mikrophon

Microphone pour combiné téléphonique et méthode de réduction du bruit du souffle

(84) Designated Contracting States:
**GB IT**

(30) Priority: **12.10.1994 JP 24610994**

(43) Date of publication of application:
**17.04.1996 Bulletin 1996/16**

(73) Proprietor: **NEC CORPORATION**
**Tokyo (JP)**

(72) Inventors:
• **Komoda, Motoyoshi, c/o NEC Corp.**
**Tokyo (JP)**

• **Murata, Yukio, c/o NEC Saitama Ltd.**
**Kamikawamachi, Kodama-gun, Saitama (JP)**

(74) Representative: **W.P. THOMPSON & CO.**
**55 Drury Lane**
**London WC2B 5SQ (GB)**

(56) References cited:
WO-A-94/06256      GB-A- 732 243
US-A- 1 419 606      US-A- 4 263 484

**Description**

This invention relates to a telephone mouthpiece and a method for minimising wind noise, particularly, but not exclusively, for use with a telephone.

A conventional telephone mouthpiece will be described below with reference to the accompanying drawings.

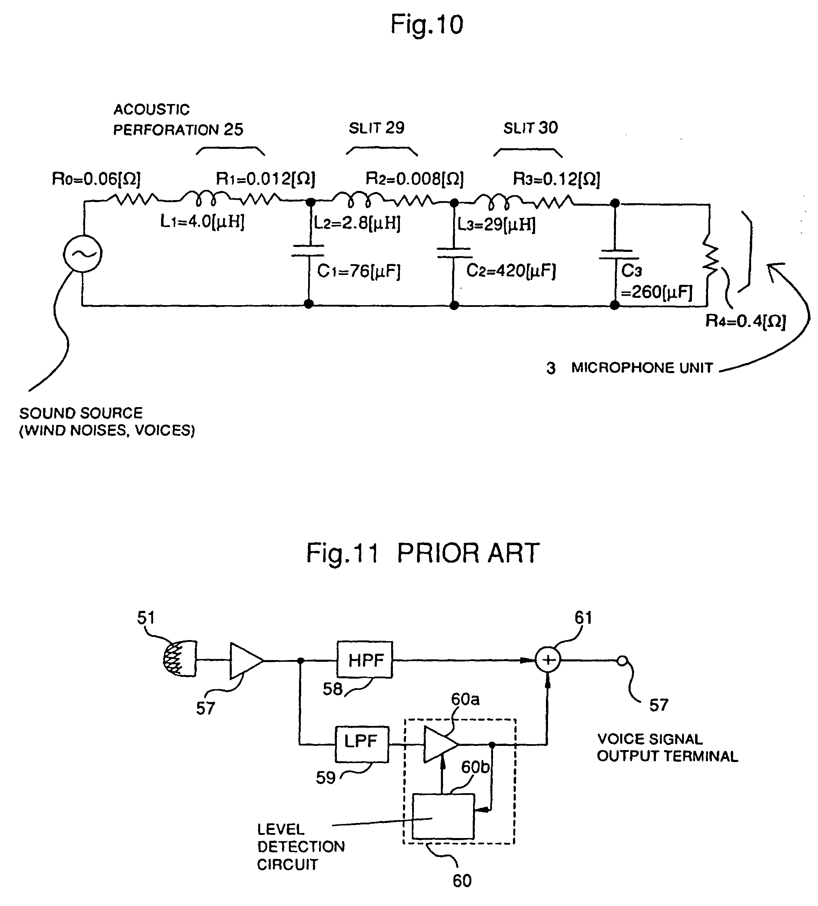

A first example of the prior art, which has been disclosed in Japanese Patent Laid-Open No. 2-214400 (1990), will be described with reference to Fig. 11 which is a block schematic diagram.

A microphone 51 in the arrangement of Fig. 11 converts a vocal sound to an electric signal and outputs a voice signal. This voice signal is supplied to a high-pass filter 58 and a low-pass filter 59 via a preamplifier circuit 52, respectively.

The high-pass filter 58 is designed so as to pass signals at a frequency of 150 Hz or higher. The low-pass filter 59 is designed so as to pass low frequency signals containing a main factor of wind noise at a frequency of 150 Hz or lower.

An output signal of the high-pass filter 58 is supplied to an input terminal of an adder circuit 61.

An output signal of the low-pass filter 59 is supplied to another input terminal of the adder circuit 61 via an automatic level control circuit 60. At this time, the automatic level control circuit 60 supplies the output signal of the low-pass filter 59 to the input side of a variable gain amplifier circuit 60a, and results in the variable gain amplifier circuit 60a supplying its output signal to another input terminal of the adder circuit 61. Simultaneously, the automatic level control circuit 60 supplies the output signal of the variable gain amplifier circuit 60a to a level detection circuit 60b, and reduces the gain of the variable gain amplifier circuit 60a in accordance with a detection level determined by the level detection circuit 60b. Namely, the automatic level control circuit 60 is designed so as to have no attenuation in the absence of wind noise and an increase in the level of attenuation as the wind noises level increases.

However, the first example of the prior art has some problems such as a complex electric circuit construction and an unnatural feeling whilst talking caused by the alteration of the speaker's voice quality due to an alteration in the frequency response when the wind noise prevention function is ON.

Next, a second example of the prior art will be explained. The second example of the prior art has been disclosed in Japanese Utility Model Application Laid-Open No. 1-139649 (1989).

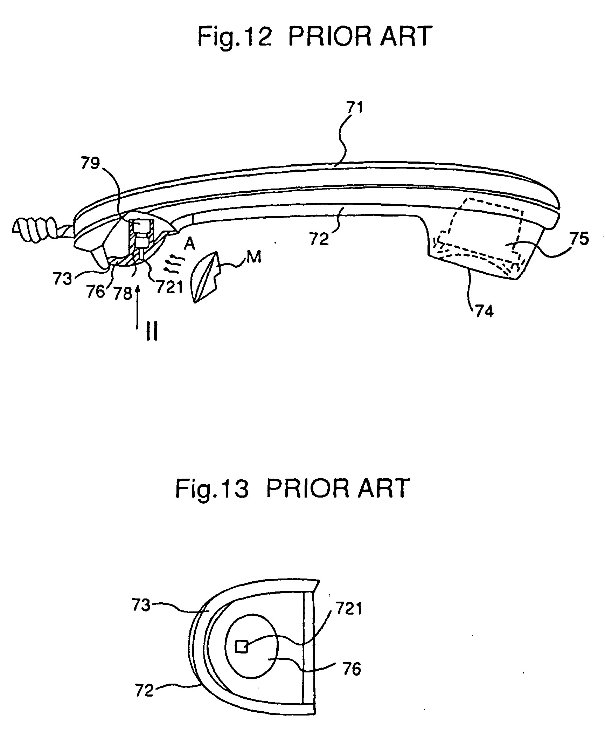

The second example is shown in Figs. 12 and 13 of the drawings.

Fig. 12 shows a side view of a handset partly broken away. Fig. 13 represents a fragmentary view taken in the direction of an arrow in Fig. 12.

Referring to Fig. 12 and Fig. 13, a protuberant telephone mouthpiece surface 76 has a dome-like shape with its top positioned at the centre of a telephone mouth-piece unit 73 connected to a base 72. An acoustic perforation 721 is formed slightly apart from the top of the dome-like shaped telephone mouthpiece surface 76 in the direction opposite to a receiver unit 74. The acoustic perforation 721 is so formed as to be apart from the receiver unit 74 as it goes from a front air chamber 78 towards the telephone mouthpiece surface 76.

When speaking using the above hand-set 71, the user usually has his/her ear tightly pressed to the receiver unit 74 for catching the other speaker's voice through an electrodynamic receiver 75. The cheek of the speaker is in close contact with the surface of the base 72. The user's lips are also located too close to the side of the protuberant domed-shaped telephone mouthpiece unit 73 in the direction of the receiver unit 74.

When the user speaks in this situation, his/her breathing is directed to the telephone mouthpiece unit 73, so that the breathing, which is a form of wind, is caused to flow directly to the section of the telephone mouth-piece surface 76 in the direction of the receiver unit 74, as an arrow A shows.

The opening section of the acoustic perforation 721 located apart from the top of the telephone mouthpiece surface 76 in the direction towards the receiver unit 74. The acoustic perforation 721 is so formed as to be apart from the receiver unit 74 as is the front air chamber 78 apart from the telephone mouthpiece surface 76.

This construction serves to minimise the possibility of wind entering into the acoustic perforation 721 directly, thus suppressing turbulence occurring therein and reducing noise. Since the space between the speaker's lips and the acoustic perforation 721 is remarkably small, the vocal sound itself becomes almost non-directional, resulting in little degradation in the voice signal. The first prior proposed arrangement requires no additional parts or major design modification, reducing the wind noise at a minimum cost.

The second prior example, reduces the effect of the breathing noises of the talker. When using it outdoors, however, its ability to suppress noise due to turbulence from outside is hardly improved, because it is arranged to cope with the air flow in a certain direction only.

US-A-4263484 discloses a telephone mouth piece arrangement including an air chamber positioned in front of microphone unit in an attempt to attenuate air flow noises such as that caused by the user's breath.

US-A-1419606 discloses a telephone mouth piece configuration in which wing-like partitions are disposed within the chamber to which the microphone is attached so as to reduce sound wave reflection within the casing.

The present application refers to a telephone mouthpiece as claimed in claim 1 and to a method for minimising wind noise input to a telephone mouthpiece as claimed in claim 13.

Features of arrangements to be described below, as examples, are that wind noise may be reduced, even out of doors, and that resonance due to wind noise in the acoustic duct section of a telephone mouthpiece may be reduced.

According to the present invention there is provided a telephone mouthpiece for minimising wind noise including an acoustic duct box provided with an acoustic perforation, a microphone unit provided on a surface of the acoustic duct box facing towards another surface of the acoustic duct box having the acoustic perforation, characterised by a plurality of partitions provided within the acoustic duct box and located between the acoustic perforation and the microphone unit, and a plurality of slots or slits provided in the partitions.

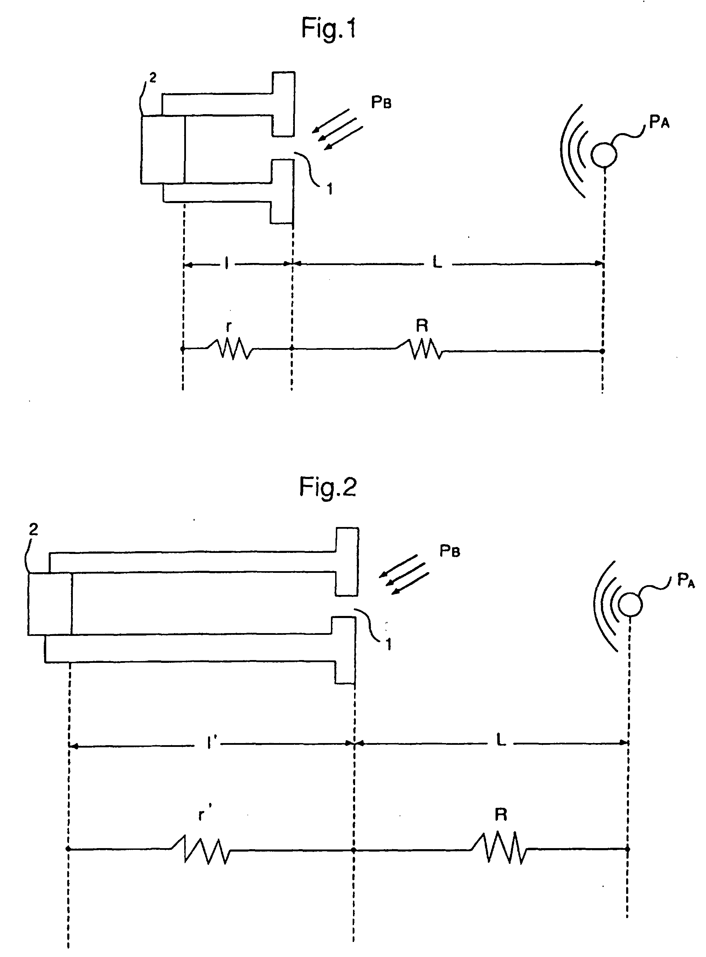

The principle of the present invention will now be explained. In Fig. 1 and Fig. 2, $P_A$ is an acoustic pressure caused by a speaker, $P_B$ is an acoustic pressure caused by wind noises at an acoustic perforation 1. L is a distance where a voice of the speaker passes until reaching to the acoustic perforation 1, R is an acoustic resistance. 1 and 1' are acoustic duct distances between the acoustic perforation 1 and a microphone unit 2, respectively, r and r' are resistances of distance 1 and distance 1', respectively. In a general hand held portable phone, L is in centimetres and 1 is in millimetres, so the relation between R and r is R>r. Here, supposing that the length of the acoustic duct is 1' that is longer than 1 as shown in the figures, the relation between them is r'>r. As a result, the relation between the acoustic resistances is R>r'>r. While, generally, L>1' due to limitations when mounting the microphone in a hand-held-portable phone.

Next, attenuation ratios of the generated acoustic pressure $P_A$ and the wind noise pressure $P_B$ are compared in the cases in which the acoustic duct distances are 1 and 1'. To simplify the explanation, a condition that r=1, r'=2, R=3 and each acoustic resistance represents its sound source is supposed.

In this case, the attenuation ratio A of the generated acoustic pressure $P_A$ is:

$$A=(r+R)/(r'+R)=(1+3)/(2+3)=4/5.$$

Like this, in the case in which the acoustic duct distance is 1', the generated acoustic pressure $P_A$ is reduced 20% than the case that the acoustic duct distance is 1.

On the other hand, the attenuation ratio B of the wind noise acoustic pressure $P_B$ is:

$$B=r/r'=1/2.$$

Like this, in the case in which the acoustic duct distance is 1', the wind noise acoustic pressure $P_B$ is reduced 50% compared to the case in which the acoustic duct distance is 1.

This means that the longer the acoustic duct distance is set, the more the wind noise acoustic pressure $P_B$ is reduced than the generated acoustic pressure $P_A$. Namely, setting the acoustic duct distance longer reduces wind noises more effectively.

However, setting the acoustic duct distance long only causes a resonance phenomenon due to the frequency response of wind noises.

To prevent this resonance phenomenon of wind noises, the acoustic duct is partitioned by slit partitions.

More, air chambers formed by the partitions serve to increase the attenuation of the wind noise acoustic pressure to the microphone greater than that of the generated acoustic pressure of a speaker.

As a result, the present invention enables the effect of wind noise to be reduced without causing a deterioration in the sound quality of a speaker.

The following description and drawings disclose, by means of an illustrative example, the invention which is defined in the appended claims, whose scope determines the extent of the protection sought.

In the drawings:-

Fig. 1 is a diagram for use in explaining the principle of the present invention,
Fig. 2 is also a diagram for use in explaining the principle of the present invention,
Fig. 3 is an exploded perspective view showing diagrammatically a part of a hand held portable phone mounted to employ one embodiment of the present invention,
Fig. 4 is a cross sectional view on the line A-A in Fig. 3,
Fig. 5 is a view showing the upper enclosure of the hand held portable phone of Fig. 3 reversed,
Fig. 6 are graphs enabling data obtained using an embodiment of the invention and of the prior art to be compared,
Fig. 7 illustrates diagrammatically an acoustic duct model in which primary resonance occurs,
Fig. 8 shows an equivalent circuit of the acoustic duct model of Fig. 7,

Fig. 9 shows the frequency response of the acoustic duct model of Fig. 7, and

Fig. 10 is a diagram showing an equivalent circuit of the presently preferred embodiment.

An arrangement illustrating an embodiment of the present invention will now be described.

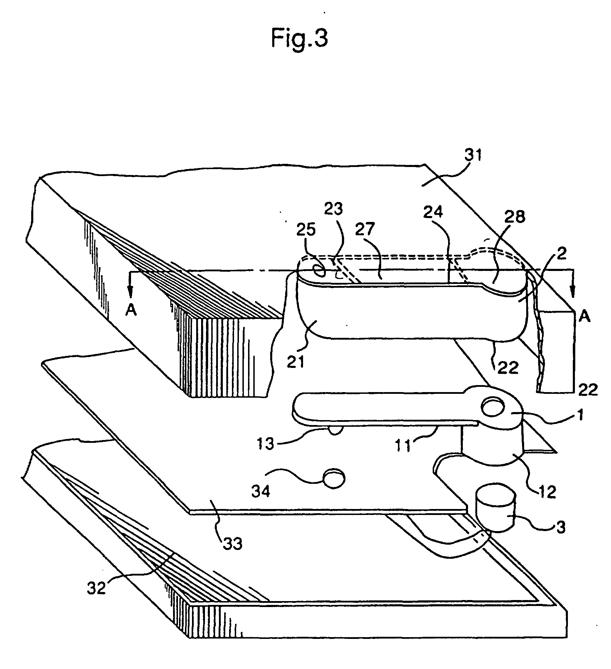

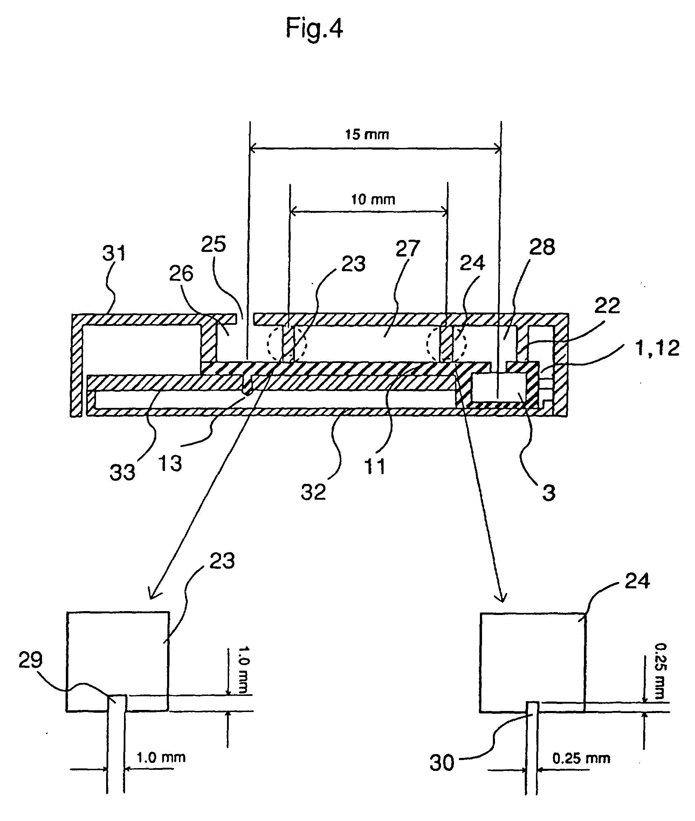

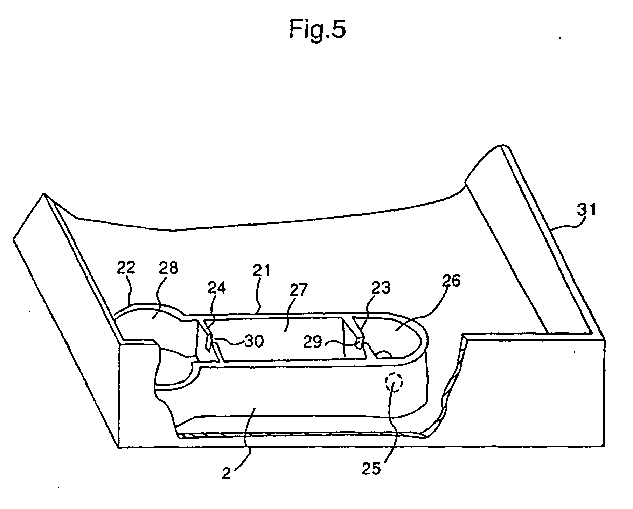

Fig. 3 is an exploded view showing a part of a hand held portable phone mounted in conjunction with an embodiment of the present invention, Fig. 4 is a cross section view on A-A in Fig. 3 and Fig. 5 is a view showing a reversed upper enclosure of the hand held portable phone of Fig. 3.

In the embodiment of Figs. 3, 4 and 5, the telephone mouthpiece includes a unit housing section 1, an acoustic duct section 2 which is tightly fitted thereto and which has been integrally formed with an upper enclosure 31 of the hand held portable phone and a microphone unit 3 connected to an electronic circuit base 33 within the hand held portable phone.

The unit housing section 1 formed of a rubber member has a cylindrical housing 12 for housing the microphone unit 3 at one end of a flat plate 11. A protrusion 13 is provided at the other end of the flat plate 11 to be positioned and fixed into a hole 34 formed in the electronic circuit base 33. The reason for forming the unit housing section 1 of a rubber member is to increase air tightness with the acoustic duct section 2 and to prevent a leak of the sound.

The acoustic duct section 2 includes an acoustic duct box 21 in the form of a box in close contact with the corresponding flat plate 11, and a cylindrical box 22 in close contact with the cylindrical housing 12 at an end of the acoustic duct box 21. The acoustic duct box 21 includes an acoustic perforation 25 at the other end of the acoustic duct box 21 and on a surface opposite to the surface facing the flat plate 11, and partitions 23 and 24 for partitioning the inside of the acoustic duct box 21 into two air chambers 26 and 27. The partitions 23 and 24 are provided with slots or slits 29 and 30, respectively.

The unit housing section 1 and the acoustic duct section 2 forming the telephone mouthpiece of the present embodiment are disposed between the upper enclosure 31 and a lower enclosure 32.

In the present arrangement, as shown in Fig. 4, it is supposed that the length of the acoustic duct is 15mm, the distance between the partitions 23 and 24 is 10mm, the length of a side of a slot or slit 29 is 1.0 mm, and the length of one side of the slot or slit 30 is 0.25 mm.

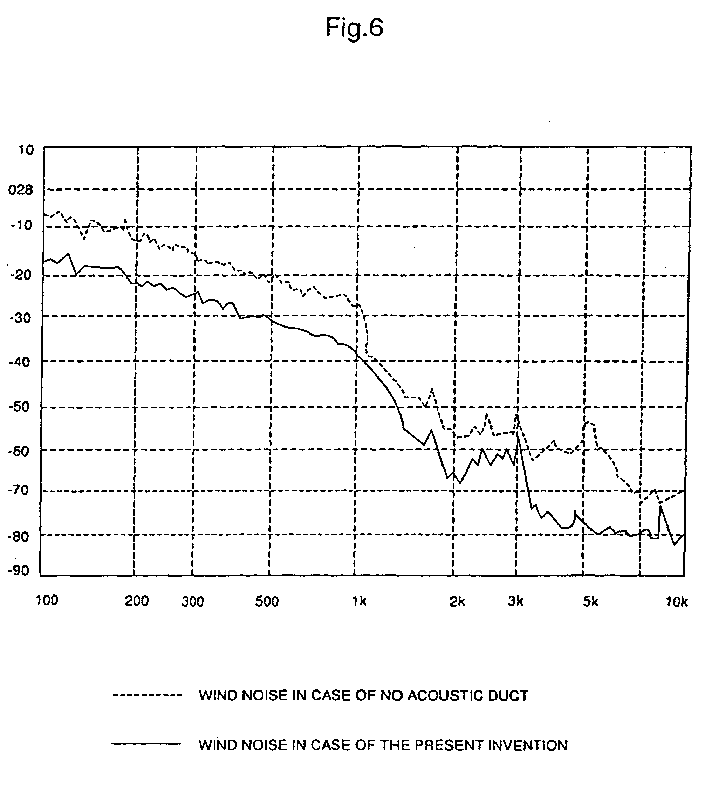

Fig. 6 shows comparison data of wind noises of the embodiment constructed as above and illustrating the invention and a conventional telephone mouthpiece which does not have a substantial acoustic duct, but which has a microphone closely touching an acoustic perforation.

As Fig. 6 shows, the telephone mouthpiece of the present embodiment acts to reduce wind noise more than the conventional telephone mouthpiece.

Next, an equivalent circuit of the illustrative embodiment will be explained.

To simplify the explanation, an experimental result of a primary resonance circuit will be explained first.

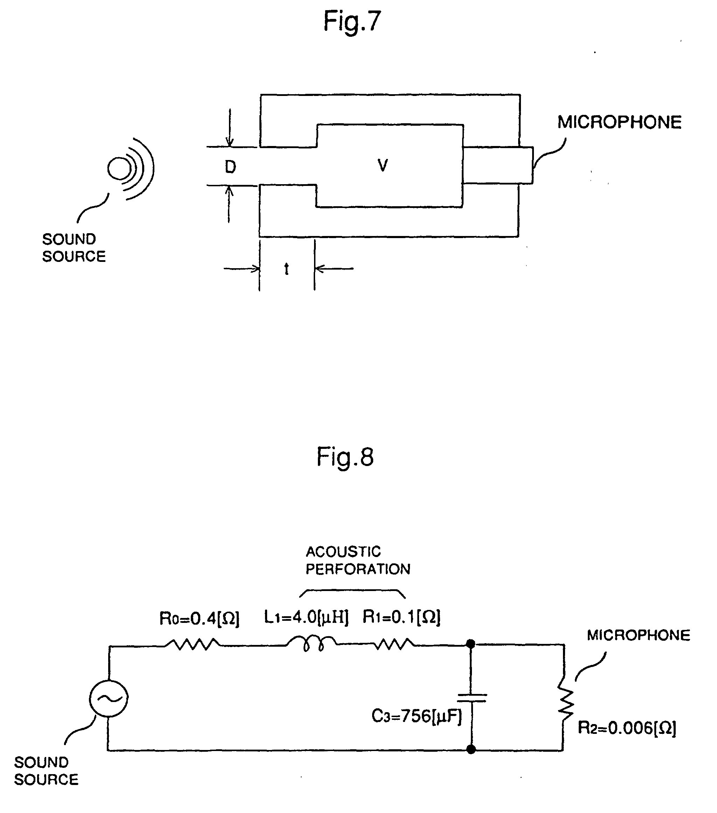

Fig. 7 shows an acoustic duct model employing primary resonance, and Fig. 8 shows an equivalent circuit of the acoustic duct model of Fig. 7.

In Fig. 7, D is the diameter of an acoustic perforation, t is the thickness of a wall of an acoustically perforated section and V is the volume of an acoustic duct. In the particular example, D=0.8 mm, t=0.8 mm and V=130 mm$^3$.

When substituting an acoustic model by an equivalent circuit, an acoustic perforation (slit or slot) can be substituted by a coil L and a resistor $R_1$. Also, a volume, a length of an acoustic duct and a microphone can be substituted by a capacitor C, a resistor $R_0$ and a resistor $R_2$, respectively.

It is known that each value of a circular acoustic perforation is given by the following equation.

$$L = 2(t + 0.75 \times D)/344000 \times D^2 \times \pi \ [H].$$

$$C = 2V/344000 \ [F]$$

$$R = 1/\omega_0 \times Q \times C \ [\Omega]$$

Where, the units are in mm, 344000 is the speed of sound, $\omega_0$ is the angular speed at the point of resonance, and Q represents the sharpness of the resonance.

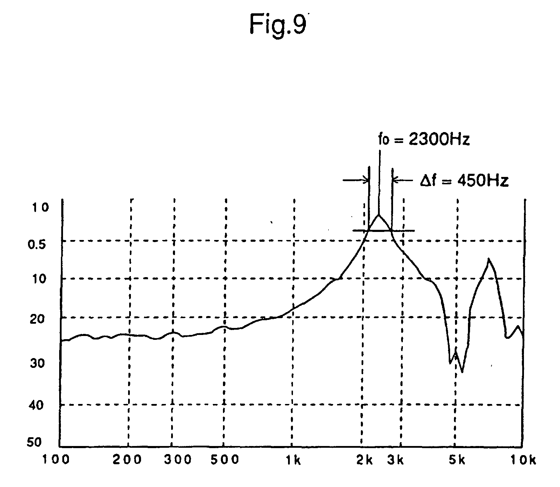

The frequency response of the acoustic duct model is shown in Fig. 9.

From the frequency response of Fig. 9, the following relations are derived.

$$Q = f_0/if = 2300/450 = 5.1$$

$$C = 2V/344000 = (2 \times 130)/344000 \cong 756\mu F$$

$$R_1 + R_0 = 1/(\omega_0 \times Q \times C)$$

$$=1/(2300 \times 2n \times 5.1 \times 756 \times 10^8) \cong 0.018[\Omega]$$

From a real measurement, $R_0$=0.4$\Omega$ and $R_2$=0.006$\Omega$.
Therefore,

$$R_1 = 0.1\Omega,$$

$$L = 2(0.8 + 0.15 \times 0.8)/344000 \times 0.8^2 \times 3.14 \cong 4.0[H].$$

Next, each value of the equivalent circuit of the present invention is calculated.

When the slot or slit is a square, as in the arrangement being described, D is calculated by substituting the area of a circular slot or slit by an equivalent area. As a result, D of the slot or slit 29 of the present arrangement is 1.1 mm approximately, and D for the slot or slit 30 is 0.28 mm approximately.

In addition, $R \propto t/s$ is known. Where, s is an area of a cross section of the acoustic perforation (slot or slit).

Similarly to the above, an equivalent circuit of the present arrangement can be calculated, resulting in the circuit of Fig. 10. In Fig. 10, the acoustic perforation 25 is replaced by a series circuit of a coil $L_1$ and a resistor $R_1$. A slit 29 is replaced by a series circuit of a coil $L_2$ and a resistor $R_2$. A slit 30 is replaced by a series circuit of a coil $L_3$ and a resistor $R_3$. Air chambers 26, 27 and 28 are replaced by capacitors $C_1$, $C_2$ and $C_3$, respectively. The microphone unit 3 is replaced by a resistor $R_4$. The length of the acoustic duct is substituted by $R_0$. The acoustic duct section 2 as a whole is equivalent to a multi-staged low pass filter.

Simulation based on the equivalent circuit shown in Fig. 7 enables the values to be varied of the distance between the partition 23 and the partition 24 (the positions of air chambers 26, 27 and 28), and of the sizes of the slots or slits 29 and 30 to values other than those of the particular arrangement described.

It will be understood that, although embodiments of the invention have been described, by way of example, with reference to the accompanying drawings, variations and modifications thereof, as well as other embodiments, may be made within the scope of the appended claims.

**Claims**

1.  A telephone mouthpiece for minimising wind noise including an acoustic duct box (21) provided with an acoustic perforation (25) for inputting sound, a microphone unit (3) provided on a surface of the acoustic duct box (21) facing towards another surface of the acoustic duct box having the acoustic perforation, **characterised by** a plurality of partitions (23, 24) provided within the acoustic duct box (21) and located between the acoustic perforation and the microphone unit (3), and a plurality of slots or slits (29, 30) provided in the partitions (23, 24).

2.  The telephone mouthpiece of claim 1, wherein the partitions (23, 24) are perpendicular to a surface on which the acoustic perforation (25) is provided and a surface on which the microphone (3) is provided.

3.  The telephone mouthpiece of claim 1, wherein the partitions (23, 24) are parallel to the surface on which the acoustic perforation (25) is provided and the surface on which the microphone (3) is provided.

4.  The telephone mouthpiece of claim 1, having slots or slits (29, 30) of different sizes.

5.  The telephone mouthpiece of claim 1, wherein the acoustic duct box (21) is a part of the telephone mouthpiece enclosure (31), and the acoustic duct box (21) and the partitions (23, 24) are integrated in a body.

6.  The telephone mouthpiece of claim 1 and including a unit housing section (1) having a flat plate (11) on one side of which a hole is provided, and a housing section (12) for housing the microphone unit (3) on the side on which the hole is provided wherein the acoustic duct box (21) is fitted to the flat plate and has its acoustic perforation (25) on a side thereof facing a surface of the flat plate (11) so that the acoustic perforation (25) does not directly face towards the hole on the flat plate (11).

7. The telephone mouth piece of claim 6, wherein a first partition and a second partition are provided in order from the acoustic perforation, the distance between the first partition and the second partition is about 10mm, a slot or slit having a depth and width of about 1mm is provided in the first partition and a square slot or slit having a depth and width of about 0.25mm is provided in the second partition.

8. The telephone mouthpiece of claim 1 and including a unit housing section (1) having a flat plate (11) and a hole (34) provided on a side of the flat plate, and a cylindrical box for housing the microphone unit on the side where the hole (34) is provided wherein the acoustic duct box (21) is fitted to the flat plate (11) of the unit housing section (1) and is provided with an acoustic perforation on a surface opposite to the side of the flat plate where the hole (34) is provided.

9. The telephone mouthpiece of claim 6 or 8, wherein the unit housing section is a rubber member.

10. The telephone mouthpiece of claim 6 or 8, wherein an acoustic duct section (2) containing the acoustic duct box (21) is integrated in a body (31) with the telephone mouthpiece enclosure and the unit housing section (1) has a protuberance section (13) for positioning in the body in the telephone mouthpiece.

11. The telephone mouthpiece of claim 6 or 8, wherein the partitions (23, 24) are provided perpendicular to a surface on which the acoustic perforation is provided and a surface on which the unit housing section (1) is provided.

12. The telephone mouthpiece of claim 8, wherein a first partition (23) is provided on the acoustic perforation (25) side of the acoustic duct box (21) and a second partition (24) is provided on a microphone unit (3) side of the acoustic duct box (21), and the distance between the first partition (23) and the second partition (24) is about 10mm, a square slot or slit of which each side is about 1mm is provided on the first partition (23) and a square slot or slit of which each side is about 0.25mm is provided on the second partition (24).

13. A method for minimising wind noise input to a telephone mouthpiece including an acoustic duct box (21) having an acoustic perforation into which sound is input and a microphone unit (3), provided on a surface of the acoustic duct box (21) facing towards another surface of the acoustic duct box having the acoustic perforation (25), that converts the sound to an electric signal, **characterized in that** it includes the step of partitioning the acoustic duct box (21) by a plurality of partitions (23,24) located between the perforation (25) and the microphone unit and **in that** a plurality of slots or slits (29,30) are provided in the partitions.

14. The method of claim 13, having slots or slits of different sizes.

**Patentansprüche**

1. Telefonhörer-Mikrophon zur Verminderung des Atemgeräusches, das aufweist: ein Schalleitungsgehäuse (21), das mit einer Schallperforierung (25) zum Eingeben von Schall versehen ist, eine auf einer Oberfläche des Schalleitungsgehäuses (21) vorgesehene Mikrophoneinheit (3), die einer anderen Oberfläche des Schalleitungsgehäuses mit der Schallperforierung zugewandt ist, **gekennzeichnet durch** mehrere Zwischenwände (23, 24), die in dem Schalleitungsgehäuse (21) vorgesehen und zwischen der Schallperforierung und der Mikrophoneinheit (3) angeordnet sind, und mehrere Spalten oder Schlitze (29, 30) in den Zwischenwänden (23, 24).

2. Telefonhörer-Mikrophon nach Anspruch 1, wobei die Zwischenwände (23, 24) senkrecht zu einer Oberfläche, auf der die Schallperforierung (25) vorgesehen ist, und einer Oberfläche, auf der das Mikrophon (3) vorgesehen ist, sind.

3. Telefonhörer-Mikrophon nach Anspruch 1, wobei die zwischenwände (23, 24) parallel zu der Oberfläche, auf der die Schallperforierung (25) vorgesehen ist, und die Oberfläche, auf der das Mikrophon (3) vorgesehen ist, sind.

4. Telefonhörer-Mikrophon nach Anspruch 1 mit Spalten oder Schlitzen (29, 30) mit verschiedenen Größen.

5. Telefonhörer-Mikrophon nach Anspruch 1, wobei das Schalleitungsgehäuse (21) ein Teil des Telefonhörer-Mikrophongehäuses (31) ist und das Schalleitungsgehäuse (21) und die Zwischenwände (23, 24) in einem Körper integriert sind.

6. Telefonhörer-Mikrophon nach Anspruch 1, das aufweist: eine Gehäuseabschnitteinheit (1) mit einer flachen Platte (11), bei der auf einer Seite ein Loch vorgesehen ist, und einen Gehäuseabschnitt (12), um die Mikrophoneinheit (3) auf der Seite aufzunehmen, auf der das Loch vorgesehen ist, wobei das Schalleitungsgehäuse (21) an die flache Platte montiert ist und seine Schallperforierung (25) auf einer Seite davon hat, die einer Oberfläche der flachen Platte (11) zugewandt ist, so daß die Schallperforierung (25) nicht direkt dem Loch auf der flachen Platte (11) zugewandt ist.

7. Telefonhörer-Mikrophon nach Anspruch 6, wobei eine erste Zwischenwand und eine zweite Zwischenwand in dieser Reihenfolge von der Schallperforierung vorgesehen sind, wobei der Abstand zwischen der ersten Zwischenwand und der zweiten Zwischenwand etwa 10 mm ist, wobei ein Spalt oder ein Schlitz mit einer Tiefe und einer Breite von etwa 1 mm in der ersten Zwischenwand vorgesehen ist und ein quadratischer Spalt oder Schlitz mit einer Tiefe und Breite von etwa 0,25 mm in der zweiten Zwischenwand vorgesehen ist.

8. Telefonhörer-Mikrophon nach Anspruch 1, der aufweist: eine Gehäuseabschnitteinheit (1) mit einer flachen Platte (11) und einem auf einer Seite der flachen Platte vorgesehenen Loch (34) und einen zylindrischen Kasten zum Aufnehmen der Mikrophoneinheit auf der Seite, wo das Loch (34) vorgesehen ist, wobei das Schalleitungsgehäuse (21) an die flache Platte (11) der Gehäuseabschnitteinheit (1) montiert ist und auf einer Oberfläche entgegengesetzt zu der Seite der flachen Platte, wo das Loch (34) vorgesehen ist, mit einer Schallperforierung versehen ist.

9. Telefonhörer-Mikrophon nach Anspruch 6 oder 8, wobei die Gehäuseabschnittseinheit ein Gummielement ist.

10. Telefonhörer-Mikrophon nach Anspruch 6 oder 8, wobei ein Schalleitungsabschnitt (2), der das Schalleitungsgehäuse (21) enthält, in einen Körper (31) mit dem das Telefonhörer-Mikrophongehäuse integriert ist und die Gehäuseabschnittseinheit (1) einen vorspringenden Abschnitt (13) zum Positionieren des Körpers in dem Telefonhörer-Mikrophon hat.

11. Telefonhörer-Mikrophongehäuse nach Anspruch 6 oder 8, wobei die Zwischenwände (23, 24) senkrecht zu einer Oberfläche, auf der die Schallperforierung vorgesehen ist, und einer Oberfläche, auf der die Gehäuseabschnittseinheit (1) vorgesehen ist, vorgesehen sind.

12. Telefonhörer-Mikrophongehäuse nach Anspruch 8, wobei eine erste Zwischenwand (23) auf der Seite der Schallperforierung (25) des Schalleitungsgehäuses (21) vorgesehen ist und eine zweite Zwischenwand (24) auf einer Seite der Mikrophoneinheit (3) des Schalleitungsgehäuses (21) vorgesehen ist und der Abstand zwischen der ersten Zwischenwand (23) und der zweiten Zwischenwand (24) etwa 10 mm ist, ein quadratischer Spalt oder Schlitz, von dem jede Seite etwa 1 mm ist, auf der ersten Zwischenwand (23) vorgesehen ist und ein quadratischer Spalt oder Schlitz, von dem jede Seite etwa 0,25 mm ist, auf der zweiten Zwischenwand (24) vorgesehen ist.

13. Verfahren zur Verringerung von Atemgeräusch, das in ein Telefonhörer-Mikrophon eingegeben wird, welches aufweist: ein Schalleitungsgehäuse (21) mit einer Schallperforierung, in die Schall eingegeben wird, und eine Mikrophoneinheit (3), welche auf einer Oberfläche des Schalleitungsgehäuses (21), die einer anderen Oberfläche des Schalleitungsgehäuses mit der Schallperforierung (25) zugewandt ist, vorgesehen ist, welche den Schall in ein elektrisches Signal umwandelt, **gekennzeichnet durch** den Schritt zum Unterteilen des Schalleitungsgehäuses (21) **durch** mehrere Zwischenwände (23, 24), die zwischen der Perforierung (25) und der Mikrophoneinheit angeordnet sind, und daß in den Zwischenwänden mehrere Spalte oder Schlitze (29, 30) vorgesehen sind.

14. Verfahren nach Anspruch 13 mit Spalten oder Schlitzen mit verschiedenen Größen.

**Revendications**

1. Embouchure de combiné téléphonique pour minimiser le bruit du vent comprenant une boîte formant conduit acoustique (21) munie d'une perforation acoustique (25) pour l'entrée de son, une unité formant microphone (3) disposée sur une surface de la boîte formant conduit acoustique (21) faisant face vers une autre surface de la boîte formant conduit acoustique ayant la perforation acoustique, **caractérisée par** une pluralité de séparations (23, 24) disposées à l'intérieur de la boîte formant conduit acoustique (21) et situées entre la perforation acoustique et l'unité formant microphone (3), et une pluralité de fentes ou encoches (29, 30) réalisées dans les séparations (23, 24).

2. Embouchure de combiné téléphonique selon la revendication 1, dans laquelle les séparations (23, 24) sont perpendiculaires à une surface sur laquelle la perforation acoustique (25) est réalisée et à une surface sur laquelle le microphone (3) est disposé.

3. Embouchure de combiné téléphonique selon la revendication 1, dans laquelle les séparations (23, 24) sont parallèles à la surface sur laquelle la perforation acoustique (25) est réalisée et à la surface sur laquelle le microphone (3) est disposé.

4. Embouchure de combiné téléphonique selon la revendication 1, ayant des fentes ou encoches (29, 30) de tailles différentes.

5. Embouchure de combiné téléphonique selon la revendication 1, dans laquelle la boîte formant conduit acoustique (21) est une partie de l'enveloppe d'embouchure de combiné téléphonique (31), et la boîte formant conduit acoustique (21) et les séparations (23, 24) sont intégrées en un corps.

6. Embouchure de combiné téléphonique selon la revendication 1 et comprenant une section formant logement d'unité (1) ayant une plaque plate (11) sur un côté de laquelle un trou est réalisé, et une section formant logement (12) pour loger l'unité formant microphone (3) sur le côté sur lequel le trou est réalisé, dans laquelle la boîte formant conduit acoustique (21) est ajustée à la plaque plate et a sa perforation acoustique (25) sur un côté de cette dernière faisant face à une surface de la plaque plate (11) de sorte que la perforation acoustique (25) ne fait pas directement face au trou sur la plaque plate (11) .

7. Embouchure de combiné téléphonique selon la revendication 6, dans laquelle une première séparation et une seconde séparation sont prévues dans l'ordre à partir de la perforation acoustique, la distance entre la première séparation et la seconde séparation étant d'environ 10 mm, une fente ou une encoche ayant une profondeur et une largeur d'environ 1 mm est réalisée dans la première séparation et une fente ou une encoche carrée ayant une profondeur et une largeur d'environ 0,25 mm est réalisée dans la seconde séparation.

8. Embouchure de combiné téléphonique selon la revendication 1 et comprenant une section formant logement d'unité (1) ayant une plaque plate (11) et un trou (34) réalisé sur un côté de la plaque plate, et une boîte cylindrique pour loger l'unité formant microphone sur le côté où le trou (34) est réalisé, dans laquelle la boîte formant conduit acoustique (21) est ajustée à la plaque plate (11) de la section formant logement d'unité (1) et est munie d'une perforation acoustique sur une surface opposée au côté de la plaque plate où le trou (34) est réalisé.

9. Embouchure de combiné téléphonique selon la revendication 6 ou 8, dans laquelle la section formant logement d'unité est un élément en caoutchouc.

10. Embouchure de combiné téléphonique selon la revendication 6 ou 8, dans laquelle une section formant conduit acoustique (2) contenant la boîte formant conduit acoustique (21) est intégrée dans un corps (31) avec l'enveloppe d'embouchure de combiné téléphonique, et la section formant logement d'unité (1) comporte une section formant protubérance (13) pour se positionner dans le corps de l'embouchure téléphonique.

11. Embouchure de combiné téléphonique selon la revendication 6 ou 8, dans laquelle les séparations (23, 24) sont disposées perpendiculairement à une surface sur laquelle la perforation acoustique est réalisée et à une surface sur laquelle la section formant logement d'unité (1) est disposée.

12. Embouchure de combiné téléphonique selon la revendication 8, dans laquelle une première séparation (23) est disposée sur le côté perforation acoustique (25) de la boîte formant conduit acoustique (21), et une seconde séparation (24) est disposée sur un côté unité formant microphone (3) de la boîte formant conduit acoustique (21), et la distance entre la première séparation (23) et la seconde séparation (24) est d'environ 10 mm, une fente ou une encoche carrée dont chaque côté fait environ 1 mm est réalisée sur la première séparation (23) et une fente ou une encoche carrée dont chaque côté fait environ 0,25 mm est réalisée sur la seconde séparation (24).

13. Procédé pour minimiser le bruit du vent entré dans une embouchure de combiné téléphonique comprenant une boîte formant conduit acoustique (21) ayant une perforation acoustique dans laquelle un son est entré et une unité formant microphone (3), disposée sur une surface de la boîte formant conduit acoustique (21) faisant face à une autre surface de la boîte formant conduit acoustique ayant la perforation acoustique (25), qui transforme le son en un signal électrique, **caractérisé en ce qu'**il comprend l'étape consistant à diviser la boîte formant conduit acoustique (21) par une pluralité de séparations (23, 24) situées entre la perforation (25) et l'unité formant microphone et **en ce qu'**une pluralité de fentes ou d'encoches (29, 30) sont réalisées dans les séparations.

14. Procédé selon la revendication 13, ayant des fentes ou des encoches de tailles différentes.

## Fig.1

## Fig.2

Fig.3

# Fig.4

Fig.5

## Fig.6

-------- WIND NOISE IN CASE OF NO ACOUSTIC DUCT

———— WIND NOISE IN CASE OF THE PRESENT INVENTION

# Fig.7

MICROPHONE

D

V

t

SOUND
SOURCE

# Fig.8

ACOUSTIC
PERFORATION

$R_0=0.4[\Omega]$     $L_1=4.0[\mu H]$     $R_1=0.1[\Omega]$

MICROPHONE

$C_3=756[\mu F]$

$R_2=0.006[\Omega]$

SOUND
SOURCE

# Fig.9

## Fig.10

ACOUSTIC
PERFORATION 25          SLIT 29          SLIT 30

$R_0=0.06[\Omega]$     $R_1=0.012[\Omega]$     $R_2=0.008[\Omega]$     $R_3=0.12[\Omega]$

$L_1=4.0[\mu H]$     $L_2=2.8[\mu H]$     $L_3=29[\mu H]$

$C_1=76[\mu F]$     $C_2=420[\mu F]$     $C_3=260[\mu F]$

$R_4=0.4[\Omega]$

3   MICROPHONE UNIT

SOUND SOURCE
(WIND NOISES, VOICES)

## Fig.11   PRIOR ART

51          61

57          HPF     58          57

VOICE SIGNAL
OUTPUT TERMINAL

60a

LPF     59     60b

LEVEL
DETECTION
CIRCUIT

60

17

## Fig.12  PRIOR ART

## Fig.13  PRIOR ART